# EUROPEAN PATENT APPLICATION

(11) **EP 2 662 685 A1**
(43) Date of publication of application: **13.11.2013**
(21) Application number: 12305522.0
(22) Date of filing: 10.05.2012
(51) Int. Cl.: G01N 21/65

(54) **Detection device for surface enhanced raman scattering and surface enhanced infrared absorption**

(71) Applicant: Centre National de la Recherche Scientifique (C.N.R.S), 75016 Paris (FR); Universite Paris 13 Nord, 93430 Villetaneuse (FR); Italian Institute of Technology (IIT), 16163 Genes (IT); Ruprecht-Karls-Universität Heidelberg, 69117 Heidelberg (DE); C.N.R. Consiglio Nazionale delle Ricerche, 00185 Roma (IT); CONSEJO SUPERIOR DE INVESTIGACIONES CIENTIFICAS, 41012 Sevilla (ES); TLB GmbH, 76137 Karlsruhe (DE)
(72) Inventor: The designation of the inventor has not yet been filed
(74) Representative: Jacobson, Claude

(57) **Abstract**

The invention concerns a detection device adapted to analyse molecules with surface enhanced Raman scattering and surface enhanced infrared spectroscopy, comprising at least one metallic element (4) having a length/width ratio strictly greater than one.

## Description

The invention concerns a detection device adapted to analyse molecules with surface enhanced Raman scattering (SERS) and surface enhanced infrared spectroscopy (SEIRS) methods.

It was observed that the optical properties of molecules when adsorbed on or near structured metal surfaces of various topologies, such as metallic nanoparticles, exhibit extremely large variations. This explains the intense resurgence of interest in the topic of surface enhanced spectroscopies.

An important application in the emerging field of plasmonics is the development of substrates providing regions of large electromagnetic enhancement, also known as "hot spots", for surface-enhanced spectroscopies. The resonant excitation of plasmons in metallic nanostructures can provide large field enhancements on the surfaces of metals which in turn provide huge increases in the detected spectroscopic signals for molecules adsorbed on their surfaces.

Vibrational spectroscopies, like infrared absorption and Raman scattering, are powerful tools for characterisation of molecules, such as biological species, since the vibrational modes are actual fingerprints of both the whole molecule (chemical bonds, conformation, 3D structure...) and its local interaction with other molecules (binding between two molecules...).

Unfortunately, infrared absorption and Raman scattering cross-sections in common experiments are far too low to detect molecules at low concentration (lower than 10⁻⁴ Mol/l in the case of protein solution for example). Thus, they generally require the study of a large amount of sample to get enough signals to discriminate the necessary vibrational features for molecular identification.

Excitation of surface plasmon resonances in metallic nanoparticles have demonstrated to yield large enhancement of the electromagnetic field at the local scale. The field enhancement created in the vicinity of a metallic nanoparticle surface can be controlled through the physical parameters and optical properties of the particles and this field enhancement can reach several orders of magnitude.

Currently, there are two main surface enhanced vibrational spectroscopies used to analyse molecules, such as biological molecules (proteins, nucleic acids or etiological agents of specific diseases...), pollutants (hydrocarbons, pesticides...)...

The first one is surface enhanced Raman scattering (SERS), where electromagnetic enhancement factors as high as 10¹⁴ have been reported, enabling detection at the single molecule level for certain molecules. SERS has been reported with excitation at both visible and near-infrared (NIR) wavelengths.

The second one is named surface enhanced infrared absorption (SEIRA) or more generally, surface enhanced infrared spectroscopy (SEIRS). SEIRS can be performed by direct infrared vibrational excitation of molecules on metal structures, resulting in enhanced absorption at wavelengths corresponding to the dipole-active vibrational transitions of the molecules. In SEIRS, all vibrational modes of the molecule with a change in dipole moment in the electric field direction are preferentially enhanced. Thus, SEIRS provides a complementary vibrational analysis of target molecules.

To reach the highest enhancement factor, some recent studies have demonstrated that the optical properties of the metallic nanoparticles, and more especially the plasmon resonance, have to be tuned according to the energy of the incident and scattered photons (in SERS) or to the energy of the vibrational modes (in SEIRS) of the molecules to be detected. For Raman scattering, the plasmon resonance should be located between the excitation and the vibrational mode wavelengths whereas for infrared absorption, the plasmon resonance should be closed to the vibrational mode wavelength.

One reason why SEIRS has received much less attention than SERS has been the limitations to the infrared spectral range where special infrared-optical instruments are needed. The maximum electromagnetic field enhancement in a plasmonic nanostructure occurs for excitations resonant with the plasmons energies, which are typically tuned in the UV, visible and near-IR regions of the spectrum for silver or gold nanoparticles. This tunability has been very important in recent advances in SERS substrates where substrates comprising plasmonic nanostructures with resonances overlapping the frequency bands of common laser sources in the visible and near-IR range have been developed. However, the plasmon resonances of metallic nanoparticles are strongly dependent on structure and composition and therefore it could be demonstrated that tuning them over a broad IR range is possible and exploitable for SEIRS.

SEIRS has an outstanding potential as a surface enhanced spectroscopy complementary to SERS, allowing also excitation of the non-Raman-active vibrational modes of the molecule. SEIRS also provides a straightforward signature of the orientation of adsorbate molecules, valuable information for elucidating molecular structure.

There is an ongoing need for detection devices useful for SEIRS and SERS. Up to now, each spectroscopy, SERS or SEIRS, is implemented on a specific substrate featuring nanoparticles of different sizes and/or material.

Disclosed herein is a molecular sensing device based on the enhancement of the molecular vibrational signal provided by metal nanoparticles and adapted to realize simultaneously Surface enhanced Raman scattering (SERS) and surface enhanced infrared spectroscopy (SEIRS).

The aim of this invention is to optimize the geometrical dimensions of the nanoparticles of the detection device to reach the best signal enhancements and the highest sensitivity in both SERS and SEIRS.

To this end, the invention relates to a detection device adapted to analyse molecules with surface enhanced Raman scattering and surface enhanced infrared spectroscopy, comprising at least one metallic element having a length/width ratio strictly greater than one.

In other words, the invention relates to a detection device adapted to analyse molecules with simultaneously SERS and SEIRS, the detection device comprising at least one metallic element which, when excited by light, is able to enhance electromagnetical fields at a distance inferior to 100 nm from the metallic element. The metallic element has a length and a width such that the ratio of length over width is strictly greater than one.

The detection device according to the invention can include one or the following features:
- the detection device can comprise several metallic elements ;
- metallic elements can be near-field coupled together ;
- metallic elements can be near-field coupled together when excited by light ;
- the inter-particle spacing can be between 0 and 100 nm, and especially between 0 and 20 nm ;
- metallic element can have a length between 50 nm and 10 µm, a width between 20 nm and 1 µm, and a height between 20 nm and 200 nm ;
- metallic element can have a length between 500 nm and 5 µm, a width between 50 nm and 200 nm, a height between 40 nm and 80 nm ;
- metallic element can be composed of gold, silver, copper or aluminium ;
- the layer of the metallic element can be adapted to immobilize only certain molecule ;
- metallic elements can extend parallel to one another and form a network comprising columns and rows ;
- the inter-particle spacing between each columns can be between 100 nm and 5000 nm, and the inter-particle spacing between each rows can be between 100 nm and 5000 nm.

The invention also concerns a diagnosis instrument allowing the detection and the analysis of the enhanced vibrational signal from molecules comprising a detection device according to the invention and vibrational spectroscope allowing the signal measurement.

The present invention will be better understood and other advantages and specific features will become more apparent on reading the description that follows, given by way of non-limiting illustration, taken in conjunction with the appended drawings, among which:
- Figures 1 to 5 show different detection devices according to the invention, each detection device comprising nanoparticle arrays ;
- Figure 6 shows a graphic of the evolution of the relative transmittance with wavenumber for a detection device according to the invention in a SEIRS experiment, and
- Figure 7 shows a graphic of the evolution of Raman intensity with the Raman shift for a detection device according to the invention in a SERS experiment.

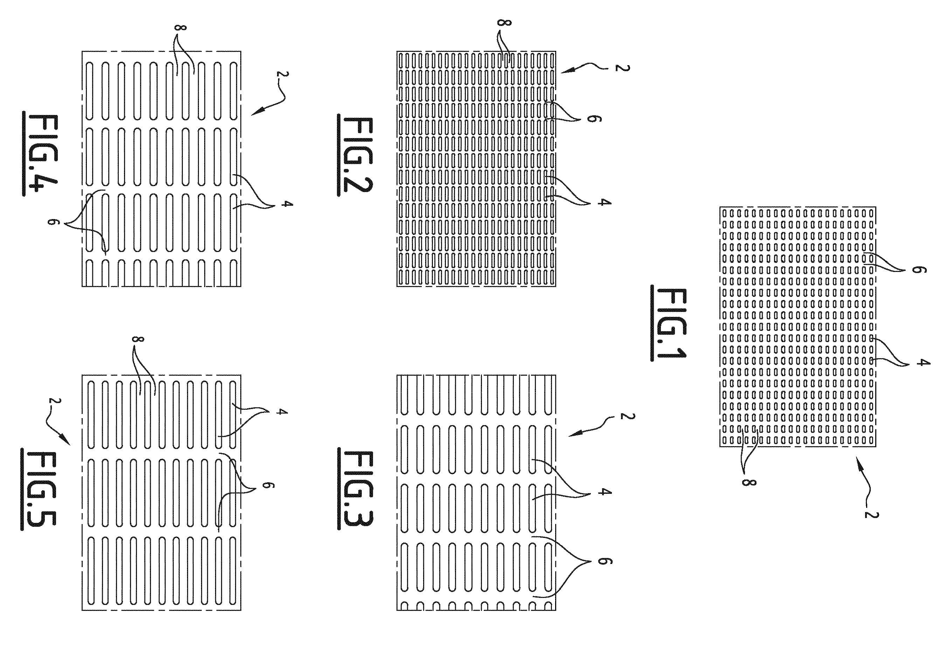

Figures 1 to 5 show different detection devices adapted to realize both surface enhanced Raman scattering (SERS) and surface enhanced infrared spectroscopy (SEIRS).

Each detection device comprises a support 2 supporting elements in the form of nanoparticles 4.

In Figure 1, nanoparticles 4 have a length of 170 nm, a width of 50 nm and a height of 50 nm.

In Figure 2, nanoparticles 4 have a length of 400 nm, a width of 60 nm and a height of 50 nm.

In Figure 3, nanoparticles 4 have a length of 600 nm, a width of 60 nm and a height of 50 nm.

In Figure 4, nanoparticles 4 have a length of 700 nm, a width of 60 nm and a height of 50 nm.

In Figure 5, nanoparticles 4 have a length of 1 µm, a width of 60 nm and a height of 50 nm.

In the Figures 1 to 5, the inter-particle spacing is 150 nm.

Support 2 is a flat or rough material allowing the excitation of the plasmon of nanoparticles 4 deposited at its surface. Support 2 is preferentially composed of dielectric material, like quartz, silica glass..., or semiconductor material, like undoped silicon....

Nanoparticles 4 have an elongated shape, like rods. Such rods extend in a main direction, thereby defining a length and in a direction perpendicular to the main direction in the plane of support 2, thereby defining a width. The height is the extension in the direction perpendicular to the two precedent directions.

The length of nanoparticles 4 can vary from 50 nm up to 10 µm, and especially varying from 500 nm to 5 µm. Such shape enables to achieve both SERS and SEIRS techniques with nanoparticles 4.

The width of nanoparticles 4 can vary from 20 nm to 1 µm and especially varying from 50 nm to 200 nm. Such shape enables to achieve both SERS and SEIRS techniques with nanoparticles 4.

The height of nanoparticles 4 can vary from 20 nm to 200 nm and especially varying from 40 nm to 80 nm. Such shape enables to achieve both SERS and SEIRS techniques with nanoparticles 4.

Upon excitation by light, nanoparticles 4 can be near-field coupled or not.

The inter-particle spacing for uncoupled nanoparticles is preferentially higher than 100 nm.

The inter-particle spacing for coupled nanoparticles can vary from 0 up to 100 nm, and especially from 0 nm to 20 nm.

According to the invention, each nanoparticle 4 is metallic.

In addition, each nanoparticle 4 has an elongated structure having a length/width ratio strictly greater than one.

According to one embodiment of the invention, nanoparticles 4 extend parallel to one another and form a network comprising columns and rows. In this embodiment, the inter-particle spacing between each columns, designed 6 on the figures 1 to 5, is between 100 nm and 5000 nm, and the inter-particle spacing between each rows, designed 8 on the figures 1 to 5, is between 100 nm and 5000 nm.

Different shapes of nanoparticle 4 can be considered. Their particular shape can be comprised in the following list: cylinder, ellipse, rectangle, bow-tie...

Metallic nanoparticles 4 can also have irregular contours, provided they can support a surface plasmon resonance at the adequate spectral position.

Any metal exhibiting plasmon resonances may be suitable to obtain the metallic nanoparticles 4, for examples gold, silver, copper, aluminium ...

The ability of metal nanoparticles 4 to localise and enhance the electromagnetic field from the visible to the infrared (IR) is the basic mechanism that allows the enhancing of the vibrational signal of molecular groups in the proximity of a metallic nanoparticle. This light-squeezing and enhancing capacity of the metals relies on the excitation of collective oscillations of the electron gas, called surface plasmons.

Each metallic nanoparticle 4 serves as a host of adsorbed target molecule to be analysed. The local electric field enhanced by the nanoparticle produces an amplification of the scattering and/or absorption signal of the molecular structure. To achieve this situation, the plasmonic resonance of the metallic host needs to be tuned spectrally to the molecular vibrations. The plasmonic resonance depends on the geometrical configuration of the nanoparticles: length, width, ratio length/width or coupling.

A nanoparticle 4, having a length around 100 nm, also has this enhancing power in the visible with large tunability of the spectral response. As nanoparticle 4 becomes longer, several microns, the effective response is shifted to the infrared. In this latter case, some higher order of resonances can also be observed in lower wavelength range, i.e. the visible range.

For one individual nanoparticle 4, it is then possible to get several resonances part of which in the IR range and part in the near-infrared/visible range. These nanoparticles 4 can be used to enhance both Raman and IR signals. Among others, nanoparticle dimers have been proven to be very effective molecular hosts for spectroscopy in the visible, as for example in surface enhanced Raman scattering (SERS).

Thus, electromagnetic response will be governed by the geometrical parameters of the nanoparticles. The geometry of nanoparticle 4 is chosen to enhance resonantly the electromagnetic signal at a given wavelength, providing a large field-enhancement in the proximity of its surface. This large local field enhances the vibrational signal of the molecules deposited at the vicinity of nanoparticles, at a distance between 0 and 20 nm of the nanoparticles, driving enormous signal for only a reduced number of molecules.

The detection device of the invention exploits the optical properties of specially designed metallic nanoparticles 4 and the associated field enhancement to obtain a direct detection of molecules bound to nanoparticles 4.

The same detection device provides strong electromagnetic enhancements at the same spatial locations at micrometer scale in both infrared and visible regions of the spectrum. The extinction spectrum of nanoparticles 4 is characterized by several features and thus shows several relatively sharp resonances : part of which in the visible range and another part in the infrared range.

Such detection device is based on vibrational signal enhancement of the molecules to be detected and adapted to realize surface enhanced Raman scattering (SERS) and surface enhanced infrared spectroscopy (SEIRS). Thus, it combines both spectroscopies on a single substrate supporting the nanoparticles.

The detection device will reach a high sensitivity provided by the established large enhancement of vibration signals due to the resonant excitation of the nanoparticles used as active elements. Due to the extremely small dimensions of nanoparticles 4 and to the giant vibrational enhancement, only few thousands of molecules lie in the enhanced-field region of each individual nanoparticle. Such detection device is adapted to detect only few molecules with concentration much lower than 1 per-mille and finally to reach detection threshold such as femto-mole (10⁻¹⁵ M) or lower, such as atto-mole (10⁻¹⁸ M). This selective detection is obtained by the immobilisation of the molecule to be detected at the vicinity of the nanoparticle surface, providing the best enhancement and then the detection of the target molecule.

The detection device uses the versatility properties of nanoparticles 4 to tune the spectral response into the whole visible and infrared wavelength range. Indeed, the plasmon resonance position can be largely shifted on a wide spectral range just by adjusting the parameters of the nanoparticles such as length and/or the length/width ratio, also called the aspect ratio. By extending the length of nanoparticles 4 into the micron size, plasmonic resonances are generated in a broad spectral range from the visible to the infrared. By selecting the right length for our detection device, the resonance can be tuned exactly at the wavelength of interest, according to the wavelength of the vibrational modes of the molecules for SEIRS and to the incident and scattered Raman photons for SERS.

Nanoparticles 4, under proper electromagnetic excitation, will yield a dramatic increase of the scattering and absorption molecular structure intensities, making possible a detection of the signals with conventional micro-spectroscopic techniques.

The detection device can be used to selectively detect molecules present in a fluid. To this aim each nanoparticle can be active on a specific molecule. The surface of nanoparticles 4 can also be adapted to immobilize only certain molecules. This immobilization, according to the coupling chemistry used, is implemented in such a manner that the captured molecules remain thereon in the event of washing processes. Therefore, the layer of each nanoparticle 4 is adapted in order to keep the bound molecules within the enhanced region of nanoparticle 4, around 20 nm from the surface. The thickness of this adapted layer is close to 2 nm and less than 5 nm.

Thus, it is possible to activate each nanoparticle of the detection device as a bio or chemical receptor to target one specific molecule. A multi-detection device adapted to detect several specific molecules can also be obtained.

According to the invention, in a first embodiment, each nanoparticle 4 used as vibrational signal enhanced system is an individual and specific detection device of target molecule combining both spectroscopies. That is to say that there is no interaction between the nanoparticles. In this case, maximum field enhancement is expected at the nanoparticles edges.

In a second embodiment, a two-dimensional (2D) close-packed array of near-field coupled nanoparticles provides equally significant enhancements to both SERS and SEIRS, combining both spectroscopies on a single nanoparticles array. In this case, the highest field is located at the inter-particle cavity and permits to provide a larger signal enhancement due to the highly localised field, creating the so-called hot-spot. Coupled metallic nanoparticles 4 allow obtaining an even more versatile structure useful for performing several spectroscopies on a single substrate to obtain complementary information on the same molecular targets.

The detection device according to the invention allows improving the detection threshold of target molecules, including highest reliability, highest selectivity and faster detection speeds.

Thus, such detection device is adapted to medical applications and is particularly devoted to the proteins detection on body fluids.

The detection device according to the invention is particularly adapted to characterize directly biological molecules such as proteins, nucleic acids or etiological agents of specific diseases avoiding the use of intermediary molecular species. Such a direct characterisation is possible by the use of complementary methods of analysis using both vibrational spectroscopies SERS and SEIRS on a single substrate. This point is of real importance especially for in vitro applications and the detection of the proteins in body fluids such as plasma.

The sensor according to the invention can also be used to analyse gaseous samples.

The signal used to identify the target molecules is their vibrational spectra (IR and Raman signal). Such signal is directly related to the molecular structure and can be seen as a direct signature of the molecule. In this way, it is not necessary to make any fluorescent labelling of the protein to be detected. Furthermore, compared to Surface Plasmon Resonance (SPR) detection system, which just gives information on the presence of one molecule bound to the metallic surface, the detection device according to the invention could directly identify the molecules to be detected with its spectral vibrational signature.

Furthermore, the use of vibrational spectroscopies is an effective advantage since they provide some spectra with narrow lines that are suited to multiplexed analysis.

The geometrical parameters of the nanoparticles as described above allow a high reproducibility of our detection device. This is necessary to get a high reproducibility of the vibrational signal enhancement, related to the optical properties of the nanoparticles.

The nanoparticles can be produced by using specific techniques such as Electron Beam Lithography (EBL) and Focus Ion Beam (FIB) technologies. With such production techniques, the geometrical parameters of the produced nanoparticles, i.e. size and shape, are accurately controlled and a large array of nanoparticles with a high degree of reproducibility at the nanometre scale can be produced. Furthermore, these techniques provide clean nanoparticles without impurities on their surface, allowing a complete adsorption of the target molecule in the metallic surface. As a consequence, the detection device according to the invention has a high reliability.

The EBL and FIB production techniques are then well adapted for such productions. However, due to their cost, when the optimum geometry of the nanoparticles is defined, the mass production of the detection device could be obtained by using nanoimprint tools which offer low-cost and large-area patterning of nanoparticles.

As a consequence, the detection device integrated in a vibrational spectroscope, allowing the signal measurement, allows the detection and the analysis of the enhanced vibrational signal from the target molecules. Such a set is a diagnosis instrument.

As mentioned above, according to the invention, each metallic nanoparticle 4 involves an elongated structure with length/width ratio strictly greater than one. Indeed, these dimensions are necessary, because when the ratio is equal to one (nanocylinder for example), metallic nanoparticles 4 could not be used as one embodiment of the invention since such metallic nanoparticles 4 give a large Raman signal enhancement in SERS with higher plasmon resonance modes.

### Examples :

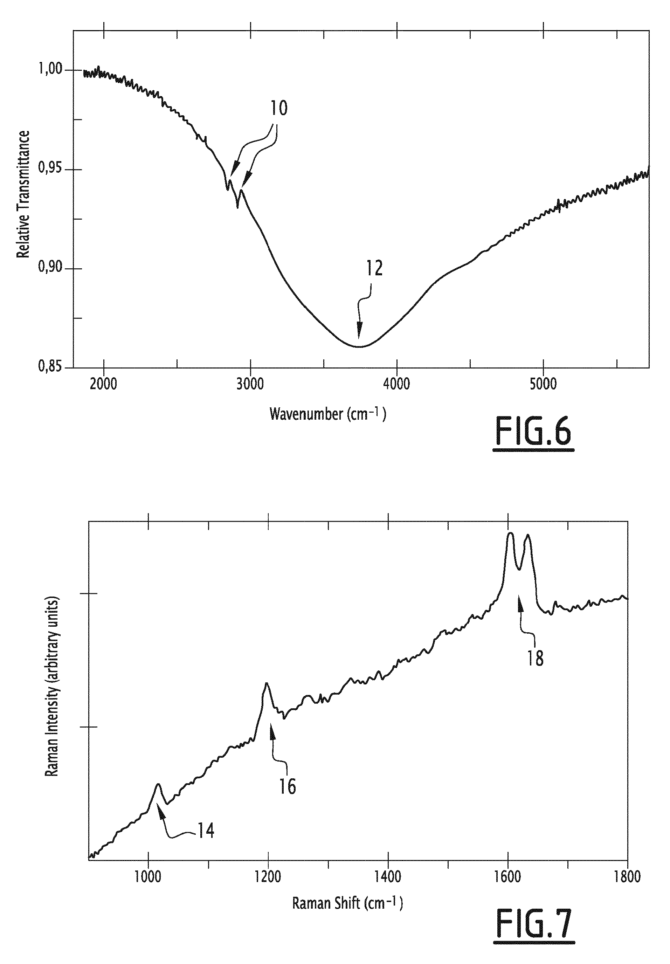

Figure 6 illustrates an experimental spectral analysis achieved by the SEIRS technique. In this case, nanoparticles 4 have a length of 500 mm, a width of 50 nm and a height of 50 nm. In the spectrum, the two peaks 10 observed between 2 500 cm⁻¹ and 3 000 cm⁻¹ on the one hand enable to identify the analysed molecule and the peak 12, observed at around 3750 cm⁻¹ on the other hand is related to the plasmon resonance of the nanoparticles 4 enabling the enhancement of the IR signal of the analysed molecule (the two peaks 10).

According to the example of Figure 7, a SERS technique is used. In this case, nanoparticles 4 have a length of 670 nm, a width of 60 nm and a height of 50 nm. The peak 14 at around 1 000 cm⁻¹, the peak 16 at 1 200 cm⁻¹ and the two peak 18 at around 1 600 cm⁻¹ are the spectroscopic signature of the analysed molecule.

Such examples illustrate that the chosen geometry of nanoparticles 4 according to the invention is adapted to analyse molecules by SERS and SEIRS techniques.

## Claims

1. Detection device adapted to analyse molecules with surface enhanced Raman scattering and surface enhanced infrared spectroscopy, comprising at least one metallic element (4) having a length/width ratio strictly greater than one.

2. Detection device according to claim 1, wherein the detection device comprises several metallic elements (4).

3. Detection device according to claim 2, wherein metallic elements (4) are near-field coupled together.

4. Detection device according to claim 2 or 3, wherein the inter-particle spacing (6, 8) is between 0 and 100 nm, and especially between 0 and 20 nm.

5. Detection device according to claims 1 to 4, wherein metallic element (4) has a length between 50 nm and 10 µm, a width between 20 nm and 1 µm, and a height between 20 nm and 200 nm.

6. Detection device according to claim 5, wherein metallic element (4) has a length between 500 nm and 5 µm, a width between 50 nm and 200 nm, a height between 40 nm and 80 nm.

7. Detection device according to claims 1 to 6, wherein metallic element (4) is composed of gold, silver, copper or aluminium.

8. Detection device according to claims 1 to 7, wherein the layer of the metallic element (4) is adapted to immobilize only certain molecule.

9. Detection device according to claims 1 to 8, wherein metallic elements (4) extend parallel to one another and form a network comprising columns and rows.

10. Detection device according to claim 9, wherein the inter-particle spacing between each columns (6) is between 100 nm and 5000 nm, and the inter-particle spacing between each rows (8) is between 100 nm and 5000 nm.

11. Diagnosis instrument allowing the detection and the analysis of the enhanced vibrational signal from molecules comprising a detection device according to claims 1 to 10 and vibrational spectroscope allowing the signal measurement.
